**Europäisches Patentamt**

**European Patent Office**

**Office européen des brevets**

(19)

(11) Veröffentlichungsnummer : **0 387 384 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **G01P 21/02, B60T 8/00**

(21) Anmeldenummer : **89104789.6**

(22) Anmeldetag : **17.03.89**

(54) **Verfahren zur Ermittlung eines korrigierten Endwertes für die Drehzahlen von Rädern eines Fahrzeuges.**

(43) Veröffentlichungstag der Anmeldung :
**19.09.90 Patentblatt 90/38**

(45) Bekanntmachung des Hinweises auf die
Patenterteilung :
**21.10.92 Patentblatt 92/43**

(84) Benannte Vertragsstaaten :
**DE FR GB IT**

(56) Entgegenhaltungen :
FR-A- 2 591 957
US-A- 3 640 586
US-A- 4 566 737

(73) Patentinhaber : **SIEMENS
AKTIENGESELLSCHAFT
Wittelsbacherplatz 2
W-8000 München 2 (DE)**

(72) Erfinder : **Forster, Joseph, Dipl.-Math.
Schusshütte 16
W-8404 Wörth (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 387 384 B1

## Beschreibung

Die Erfindung betrifft ein Verfahren nach dem Oberbegriff von Anspruch 1.

Bei einem bekannten Antiblockiersystem werden unterschiedliche dynamische Abrollgeschwindigkeiten von Rädern eines Fahrzeugs, die durch unterschiedliche Reifenumfänge oder bei Kurvenfahrten auftreten, kompensiert. Es wird ein korrigiertes ABS-Steuersignal erzeugt, das für eine korrekte Herabsetzung des Bremsdruckes beim Durchdrehen eines Rades sorgt. Als Referenzgeschwindigkeit für die Fahrzeuggeschwindigkeit dient die Geschwindigkeit des Rades, die als die schnellste gemessen wird. Die Werte je eines Paares über Kreuz angeordneter Reifen werden aneinander angepaßt, in einem Multiplikator zusammengefaßt und mit dem Referenzwert verglichen (US-A 4 566 733).

Bei einem anderen ABS-System mit Raddrehzahlsensoren und paarweise die Sensorsignale verarbeitenden Verstärkern, erfolgt ebenfalls eine Kompensation unterschiedlicher Raddurchmesser. Zu Beginn jeder Bremsung werden die Drehzahlwerte von drei Sensoren mit dem Signal des vierten Sensors verglichen und gegebenenfalls an letzteres angeglichen. Das System ist für Schienenfahrzeuge vorgesehen, es werden deshalb nur Drehzahlsignal-Differenzen kompensiert die auf Radverschleiß beruhen, auf Kurvenfahrt beruhende werden nicht betrachtet (US-A 3 640 586).

Eine weitere bekannte Antriebsregelung dient dazu, das Fahrverhalten eines Kraftfahrzeugs zu stabilisieren. Ein Lenkwinkelsensor gibt die gewünschte Fahrtrichtung an, der Mittelwert der Hinterradgeschwindigkeiten ergibt die Fahrzeuggeschwindigkeit und das Verhältnis der Vorderradgeschwindigkeiten zueinander ergibt das Giermaß. Wenn sich zwischen dem Giermaß und dem Lenkwinkel eine Differenz ergibt, dann erfolgt ein Regeleingriff. Als Meßgröße für die aktive Fahrzustands-Stabilisierung dient die seitliche Beschleunigung oder die Drehgeschwindigkeit des Fahrzeugs, die Raddrehgeschwindigkeiten werden dazu nicht benötigt (FR-A 2 591 957).

(Hierauf folgend die ursprünglichen Unterlagen ab Spalte 1, Zeile 14.)

Der Erfindung liegt daher die Aufgabe zugrunde, ein Verfahren anzugeben, das mit geringem Aufwand die Unterschiede im Abrollumfang der einzelnen Räder berücksichtigt und einen entsprechend korrigierten Endwert für die Drehzahlen der Räder liefert.

Die Lösung der Aufgabe ist in Anspruch 1 gekennzeichnet.

Die Erfindung nutzt den Umstand, daß sich die Räder eines geradeausfahrenden Fahrzeuges bei identischem Raddurchmesser gleich schnell drehen. Drehzahlunterschiede müssen daher auf unterschiedlichem dynamischen Radumfang beruhen, der z.B. durch unterschiedliche Profilhöhe des Reifens bedingt ist. Zum Ermitteln der Geradeausfahrt genügt es, wenn eine vorgegebene Anzahl von Rädern, die sich jedoch an zwei verschiedenen Seiten des Fahrzeuges befinden müssen, darauf untersucht werden, ob die Drehzahlen innerhalb eines Toleranzbereiches liegen, der durch tatsächlich mögliche und zulässige Unterschiede des dynamischen Radumfangs bestimmt ist. So läßt sich ohne zusätzliche Einrichtungen (z.B. Lenkwinkelgeber) Geradeausfahrt des Fahrzeugs erkennen. Die Referenzgeschwindigkeit wird durch Mittelwertbildung aus den für die Ermittlung der Geradeausfahrt herangezogenen Werte gebildet.

Eine Weiterbildung des Verfahrens nach dem obhängigen Anspruch 2 vermeidet, daß ein durch das Bremsen bedingter Schlupf an den Rädern zu Fehlern führt.

Die durch den abhängigen Anspruch 3 gekennzeichnete Weiterbildung des Verfahrens verhindert, daß eine Fahrt in weiten Kurven fälschlicherweise als Geradeausfahrt interpretiert wird.

Die mit dem abhängigen Anspruch 4 gekennzeichnete Weiterbildung schließt offensichtliche Messfehler bei der Ermittlung des Anfangswertes aus.

Die Weiterbildung gemäß abhängigen Anspruch 5 trägt dem Umstand Rechnung, daß erst ab einer Mindestgeschwindigkeit ausreichend genaue Anfangswerte vorhanden sind.

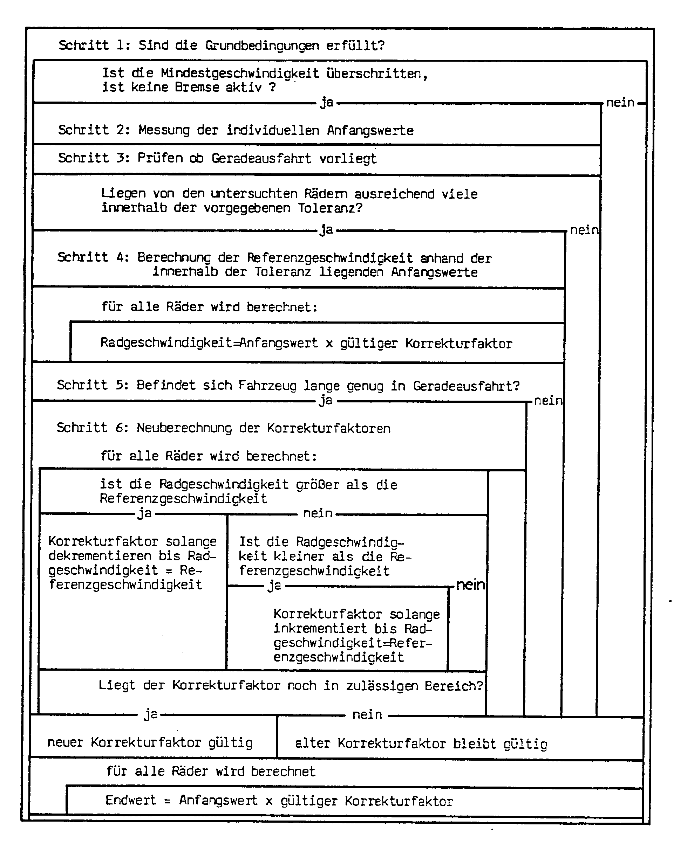

Nachfolgend wird das Verfahren anhand eines in der Figur gezeigten Struktogramms näher erläutert.

In Schritt 1 wird geprüft, ob die Grundbedingungen erfüllt sind. Die Grundbedingungen sind erstens, daß eine Mindestgeschwindigkeit überschritten ist und zweitens, daß keine Bremse betätigt ist.

Die Mindestgeschwindigkeit ist notwendig, da als Anfangswerte die Drehzahlen der Räder dienen. Die Drehzahlen werden durch Sensoren, welche Markierungen am Rad erkennen erfaßt. Die Markierungen an den einzelnen Rädern werden in der Regel nicht synchron zueinander stehen: Die Anfangswerte liegen daher phasenverschoben vor. Bei langsamer Fahrt kann dies zu Messfehlern führen.

Die Räder eines ungebremsten Fahrzeugs rollen schlupffrei, bei einem gebremsten Fahrzeug besteht die Möglichkeit, daß die Räder Schlupf haben. Würde die Ermittlung der Korrekturfaktoren in gebremstem Zustand stattfinden, könnte dies aufgrund des möglicherweise vorhandenen Schlupfes Fehler verursachen. Ebenso besteht die Möglichkeit, daß beim Beschleunigen Schlupf an den Antriebsrädern auftritt. Dieser für die Berechnung der Korrekturfaktoren ebenfalls ungeeignete Betriebszustand kann mit einem Sensor für die Drosselklappenstellung erkannt werden.

In Schritt 2 werden die individuellen Anfangswerte -Drehzahl je Rad- gemessen.

In Schritt 3 erfolgt das Prüfen, ob Geradeausfahrt vorliegt. Dabei wird untersucht, ob die Anfangswerte einer vorgegebenen Anzahl von Rädern innerhalb eines gewissen Toleranzbereichs liegen. Das Einräumen eines Toleranzbereichs ist notwendig, da der individuelle dynamische Radumfang der Räder aufgrund unterschiedlicher Profilhöhe oder geringfügiger Füll-Druckunterschiede zu unterschiedlichen Anfangswerten führt. Die vorgegebene Anzahl von Rädern, deren Anfangswerte im Toleranzbereich liegen müssen, kann nun der Anzahl aller am Fahrzeug vorhandenen Räder oder einer Teilmenge davon entsprechen. Wählt man eine Teilmenge, dann ist es zweckmäßig, mehrere Untergruppen von Rädern zu bilden, wobei jedes Rad der Teilmenge in mindestens einer Untergruppe vertreten sein muß und in jeder Untergruppe Räder von unterschiedlichen Seiten des Fahrzeugs vorhanden sein müssen. Wenn in einer der Untergruppen alle Anfangswerte innerhalb des Toleranzbereiches liegen, ist die Bedingung für Geradeausfahrt erfüllt. Das Untersuchen von Untergruppen hat den Vorteil, daß stark abweichende Anfangswerte, die auf prinzipiellen Eigenschaften der dazugehörigen Räder beruhen (z.B. Notrad mit abweichendem Durchmesser) ausgefiltert werden.

Schritt 4 beinhaltet die Berechnung der Referenzgeschwindigkeit. Hierzu werden diejenigen Anfangswerte, welche in Schritt 3 als im Toleranzbereich liegend erkannt wurden, verwendet. Aus ihnen wird der Mittelwert und daraus die Referenzgeschwindigkeit berechnet.

Mittels Schritt 5 wird untersucht, ob sich das Fahrzeug lange genug in Geradeausfahrt befindet. In weiten Kurven können die Drehzahl-Unterschiede der kurveninneren und kurvenäußeren Räder des Fahrzeuges innerhalb des vorgegebenen Toleranzbereiches liegen. In der Praxis ist dieser Zustand jedoch zeitlich begrenzt; daher eignet sich ein Zeitkriterium zum Ausschluß eines Fehlers aufgrund weiter Kurven. Erst wenn die Bedingung für Geradeausfahrt über eine vorgegebene Zeit ununterbrochen vorgelegen hat, wird der Korrekturfaktor neu berechnet. Die Ansprechgeschwindigkeit des Verfahrens auf Änderungen der Anfangswerte läßt sich durch den Wert für die vorgegebene Zeit einstellen.

Mit Schritt 6 erfolgt die Berechnung des aktuell gültigen Korrekturfaktors. Eine Plasibilitätskontrolle zur Elimination von Korrekturfaktoren, die nicht vernünftig sind, erfolgt mittels einer Abfrage, ob der Korrekturfaktor noch in einem zulässigen Bereich liegt. Dieser Bereich ist z.B. anhand der für das Fahrzeug vorgegebenen Reifenabmessungen bestimmt.

Das Verfahren wird zyklisch wiederkehrend durchgeführt, ein ständiger Angleich der Korrekturwerte an die individuellen dynamischen Radumfänge ist so gewährleistet.

**Patentansprüche**

1. Verfahren zum Ermitteln von korrigierten Werten der Radgeschwindigkeiten eines fahrenden Fahrzeuges,
   - bei dem aus gemessenen Radgeschwindigkeiten eine Referenzgeschwindigkeit berechnet wird und
   - bei dem Korrekturfaktoren für die Radgeschwindigkeit berechnet werden, **dadurch gekennzeichnet**,
   - daß durch Überprüfen, ob die gemessenen Radgeschwindigkeiten einer vorgegebenen Anzahl von an unterschiedlichen Seiten des Fahrzeugs angeordneten Rädern innerhalb eines vorgegebenen Toleranzbereiches liegen, festgestellt wird, ob sich das Fahrzeug in Geradeausfahrt befindet,
   - daß bei Erfüllung dieser Bedingung aus denjenigen gemessenen Radgeschwindigkeiten, die innerhalb des Toleranzbereiches liegen, durch Mittelwertbildung die Referenzgeschwindigkeit berechnet wird, und
   - daß aus der Abweichung der gemessenen Radgeschwindigkeiten von der Referenzgeschwindigkeit für jedes Rad ein individueller Korrekturfaktor ermittelt wird.

2. Verfahren nach Anspruch 1, **dadurch gekennzeichnet**, daß die Korrekturfaktoren nur dann neu berechnet werden, wenn keine Bremse aktiviert ist.

3. Verfahren nach Anspruch 1, **dadurch gekennzeichnet**, daß die Korrekturfaktoren erst dann neu berechnet werden, wenn die Bedingung für Geradeausfahrt über einen vorgegebenen Zeitraum ununterbrochen bestanden hat.

4. Verfahren nach Anspruch 1, **dadurch gekennzeichnet**, daß jeder Korrekturfaktor auf einen vorgegebenen Bereich begrenzt ist.

5. Verfahren nach Anspruch 1, **dadurch gekennzeichnet**, daß die Korrekturfaktoren erst dann neu berechnet werden, wenn eine Mindestgeschwindigkeit des Fahrzeugs überschritten ist.

**Claims**

1. Method for determining corrected values of the wheel speed of a moving vehicle,
   - in which a reference speed is calculated from measured wheel speeds and
   - in which correction factors for the wheel speed are calculated, characterised in that
   - by testing whether the measured wheel speeds of a predetermined number of wheels arranged on different sides of the vehicle lie within a predetermined tolerance range it is determined whether the vehicle is travelling straight ahead,

-when this condition is fulfilled the reference speed is calculated by averaging those measured wheel speeds which lie within the tolerance range, and

-and individual correction factor is determined for each wheel from the deviation of the measured wheel speeds from the reference speed.

2. Method according to Claim 1, characterised in that the correction factors are only recalculated if no brake is activated.

3. Method according to Claim 1, characterised in that the correction factors are not recalculated until the condition for straight-ahead travel has existed uninterrupted for a predetermined time period.

4. Method according to Claim 1, characterised in that each correction factor is limited to a predetermined range.

5. Method according to Claim 1, characterised in that the correction factors are not recalculated until a minimum speed of the vehicle is exceeded.

**Revendications**

1. Procédé pour déterminer des valeurs corrigées des vitesses de roues d'un véhicule en déplacement, selon lequel

-une vitesse de référence est calculée à partir de vitesses des roues mesurées, et

-des facteurs de correction sont calculés pour la vitesse des roues,

caractérisé par le fait

-que, en vérifiant si les vitesses mesurées d'un nombre prédéterminé de roues disposées sur des côtés différents du véhicule se trouvent dans une plage prédéterminée de tolérance, on détermine si le véhicule se déplace en ligne droite,

-que, lorsque cette condition est satisfaite, on calcule, à partir des vitesses de roues mesurées, qui se trouvent dans plage de tolérance, la vitesse de référence par formation de la valeur moyenne, et

-qu'à partir de l'écart entre les vitesses des roues mesurées et la vitesse de référence pour chaque roue, on détermine un facteur de correction individuel.

2. Procédé suivant la revendication 1, caractérisé par le fait que les facteurs de correction ne sont recalculés que lorsqu'un frein n'est pas mis en action.

3. Procédé suivant la revendication 1, caractérisé par le fait que les facteurs de correction ne sont recalculés que lorsque la condition correspondant à un déplacement en ligne droite à existé sans interruption pendant un intervalle de temps prédéterminé.

4. Procédé suivant la revendication 1, caractérisé par le fait que chaque facteur de correction est limité à une plage prédéterminée.

5. Procédé suivant la revendication 1, caractérisé par le fait que les facteurs de correction ne sont recalculés que lorsque la vitesse du véhicule dépasse une valeur minimale.

Schritt 1: Sind die Grundbedingungen erfüllt?

Ist die Mindestgeschwindigkeit überschritten,
ist keine Bremse aktiv ?
——————————————— ja ——————————————— nein

Schritt 2: Messung der individuellen Anfangswerte

Schritt 3: Prüfen ob Geradeausfahrt vorliegt

Liegen von den untersuchten Rädern ausreichend viele
innerhalb der vorgegebenen Toleranz?
——————————————— ja ——————————————— nein

Schritt 4: Berechnung der Referenzgeschwindigkeit anhand der
innerhalb der Toleranz liegenden Anfangswerte

für alle Räder wird berechnet:

Radgeschwindigkeit=Anfangswert x gültiger Korrekturfaktor

Schritt 5: Befindet sich Fahrzeug lange genug in Geradeausfahrt?
——————————————— ja ——————————————— nein

Schritt 6: Neuberechnung der Korrekturfaktoren

für alle Räder wird berechnet:

ist die Radgeschwindigkeit größer als die
Referenzgeschwindigkeit
——————— ja ——————— nein ———————

| Korrekturfaktor solange dekrementieren bis Radgeschwindigkeit = Referenzgeschwindigkeit | Ist die Radgeschwindigkeit kleiner als die Referenzgeschwindigkeit<br>——— ja ——— nein<br><br>Korrekturfaktor solange inkrementiert bis Radgeschwindigkeit=Referenzgeschwindigkeit |

Liegt der Korrekturfaktor noch in zulässigen Bereich?
——————— ja ——————— nein ———————

| neuer Korrekturfaktor gültig | alter Korrekturfaktor bleibt gültig |

für alle Räder wird berechnet

Endwert = Anfangswert x gültiger Korrekturfaktor